# EUROPEAN PATENT APPLICATION

(11) **EP 0 729 865 A1**
(43) Date of publication of application: **04.09.1996**
(21) Application number: 96300283.7
(22) Date of filing: 15.01.1996
(51) Int. Cl.: B60R 13/06, B60J 10/00, E06B 7/23

(54) **Window sealing arrangement**

(30) Priority: 03.03.1995 GB 9504346
(71) Applicant: DRAFTEX INDUSTRIES LIMITED, Edinburgh EH3 6YY, Scotland (GB)
(72) Inventor: Burstert, Pierre, F-51100 Reims (FR); Parjoie, Philippe, F-51100 Reims (FR); Correia, Jacques, F-08300 Barby (FR)
(74) Representative: Foster, David Martyn

(57) **Abstract**

A window glass sealing strip is made of flexible material (2) fixed to a rigid support (1) and provides integrally formed flexible lips (3,4,5), at least one of which (5) abuts the frame (11) of a window opening, forming a seal around the window opening. The rigid support (1) is provided with a plurality of integrally formed fasteners (9) positioned at intervals along the length of the strip and protruding through apertures (14) in the frame (11) for positioning and mounting the support (1). The flexible sealing means (2) is preferably over-moulded onto the support (1) and held in place by a plurality of stops (8) extending through the support (1) and resiliently contacting the frame.

## Description

The invention relates generally to a sealing strip comprising a rigid support matching at least part of the periphery of the frame of an opening and sealing means for providing a seal between a closure member in the frame and the support, the sealing means comprising flexible material overlying one face of the suport; and at least one fastening means extending away from an opposite face of the support for positioning and mounting the support on the frame.

Such a strip is shown in GB-A-997 597. However, in this arrangement, the rigid support is held in contact with the frame by the fastening means and its positioning may be disrupted by imperfections in the surface of the frame. The invention aims to overcome this problem.

According to the invention, the strip as set forth above is characterised in that the flexible material is provided with at least one spacer extending through the support for resiliently contacting the frame.

Window glass sealing strips embodying the invention and for use in vehicles will now be described, by way of example only, with reference to the accompanying diagrammatic drawings in which:
Figure 1 is a transverse cross-sectional view of one of the sealing strips as assembled onto a vehicle body panel;
Figure 2 is a plan view of the sealing strip of Figure 1a in the direction of arrow II of Figure 1;
Figure 3 is a view corresponding to Figure 2 but showing the sealing strip mounted on a vehicle body panel, with the window open;
Figure 4 corresponds to Figure 3 but shows the window closed; and
Figure 5 corresponds to Figure 4 but shows a modified form of one of the window glass sealing strips.

The window glass sealing strip to be described in detail below is, in this example, for sealing a hinged window glass in a window opening of a motor vehicle body. However, modified forms of the sealing strip may be used for sealing different types of window glass in different vehicles.

The arrangement generally comprises a rigid plastic support 1 attached to a flexible sealing part 2, the latter being provided with integrally formed lips 3,4,5. The support 1 and the sealing part 2 extend together around the frame of the window opening to be sealed. The rigid support 1 is provided with pairs of apertures at spaced-apart positions along its length, two such apertures being shown at 6 and 7.

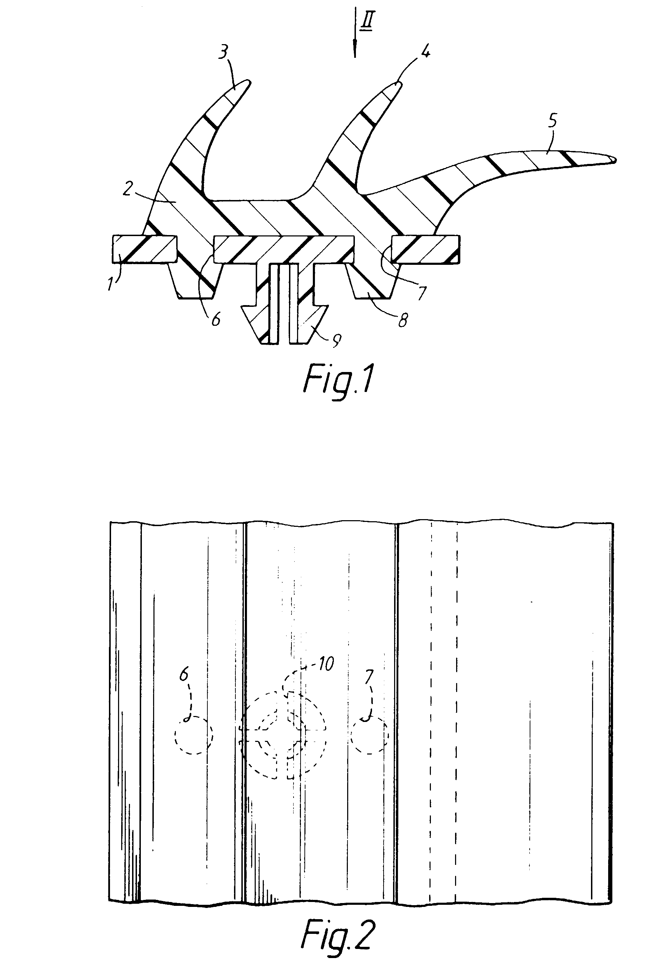

The sealing part 2 is suitably compatible with the support 1 and is fixed to it by being moulded onto the support by an over-moulding process and is also mechanically held in place by means of integrally formed stops 8. These stops extend through the apertures in the rigid support. Figure 1 shows two such stops 8 extending through the apertures 6 and 7. However, the sealing strip can be produced by any other suitable method, such as by injection-moulding (bi-injection). Instead, the two parts can be produced separately, by moulding or extrusion for example, and then assembled and glued together.

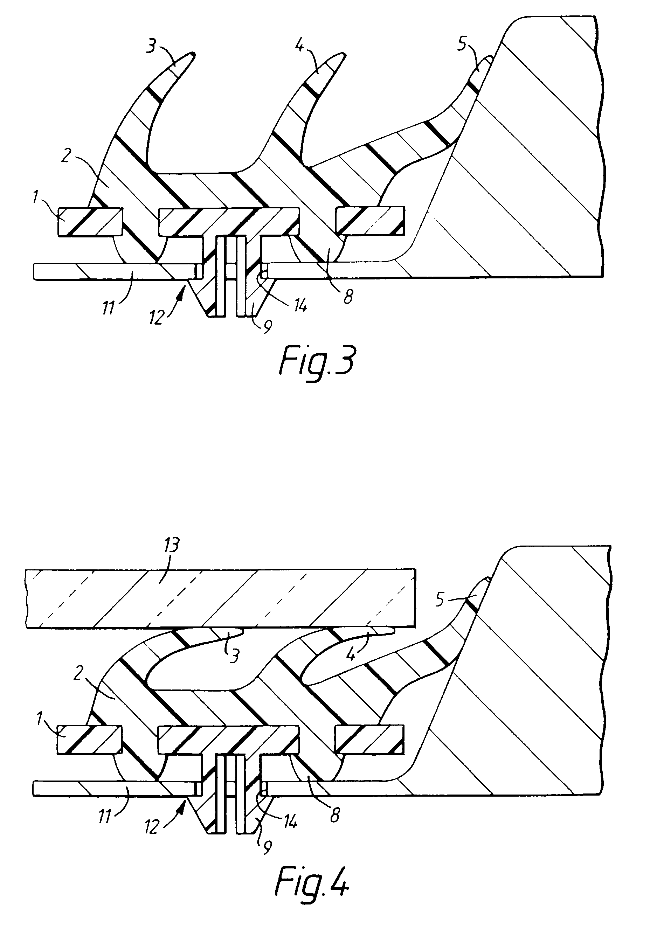

The rigid support 1 is provided with integrally formed fasteners which are positioned at intervals along the length of the sealing strip, one such fastener being shown at 9. The fasteners 9 are of circular cross-section but are each provided with a cross-shaped notch 10. This notch 10 allows the fastener 9 to be easily deformable, thus allowing the rigid support 1 to be mounted onto the frame 11 of the vehicle body panel adjacent to the window opening as shown in Figure 3. The rigid support 1 is firmly fixed to the frame 11 by means of the integrally formed fasteners protruding through the apertures one such aperture is shown at 14 in the frame 11. This is achieved by compressing the sides of the notched fasteners 9, to reduce their cross-sectional area, and hence enable simple mounting in the smaller apertures 14 in the frame 11.

When the fasteners 9 have been mounted in the apertures 14 in this way and the compressive force released, integrally formed steps 12 on the fasteners 9 abut the inside surface of the frame 11 and prevent the fasteners 9 being easily removed from the apertures 14. The stops 8 of the sealing part 2 protruding through the rigid support 1 are thus compressed between the rigid support 1 and the body panel work 11, preventing any movement of the sealing strip in relation to the panel. The flexible lip 5 abuts the frame 11, forming a seal around the window opening.

Figure 3 shows the window open. When the window is closed as shown in Figure 4, the lips 3 and 4 deform under the force applied by the closing window 13. This ensures a good seal between the sealing strip and the glass.

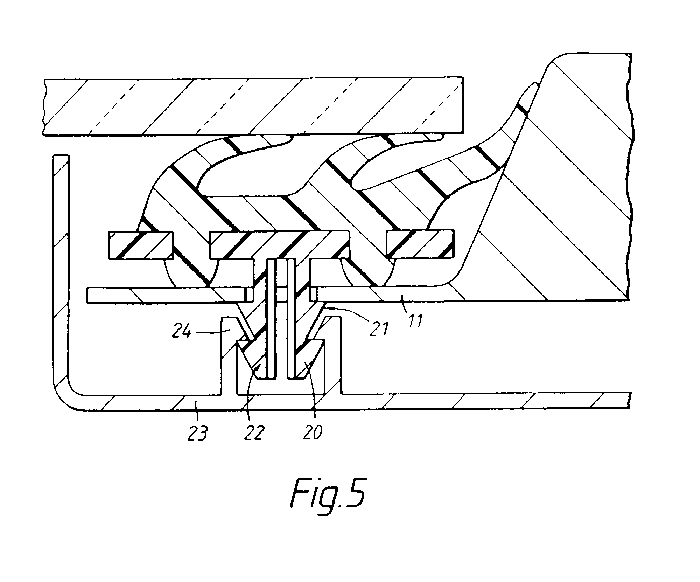

The shape of the sealing strip can be modified depending upon the type of window and the shape of the frame 11. Similarly, the type of integrally formed fastener 9 on the rigid support strip 1 can be modified, as shown at 20 by way of example in Figure 5. In Figure 5 (in which parts similar to those in the other Figures are correspondingly referenced), the modified fasteners 20 have two distinct active parts 21,22. The first part 21 of the fastener 20 holds the sealing strip to the frame 11 of the window opening in the vehicle body panel. The second part 22 forms a fixation point for the interior trim 23 to be fixed to the frame 11. The interior trim 23 is provided with an integrally formed bracket 24. Assembly is carried out by first fixing the sealing strip to the frame 11. The bracket 24 and associated trim 23 can then be pushed onto the deformable fastener 20 as shown in Figure 5.

## Claims

1. A sealing strip comprising: a rigid support (1) matching at least part of the periphery of the frame (11) of an opening and sealing means (2) for providing a seal between a closure member (13) in the frame (11) and the support (1); the sealing means comprising flexible material (2) overlying one face of the support (1); and at least one fastening means (9) extending away from an opposite face of the support (1) for positioning and mounting the support (1) on the frame (11); characterised in that the flexible material (2) is provided with at least one stop (8) extending through the support (1) for resiliently contacting the frame (11).

2. A strip according to claim 1, characterised in that the or each stop (8) is integrally formed with the sealing means (2).

3. A strip according to claim 1 or 2, characterised by a plurality of the fastening means (9) positioned at intervals along the length of the support (1).

4. A strip according to any preceding claim, characterised in that movement between the support (1) and the frame (11) is resisted by compression of the or each stop (8) between the support (1) and the frame (11).

5. A strip, according to any preceding claim, characterised in that the support (1) is made of planar substantially rigid plastics material for extending along a matching part of the length of the frame (11), in that there are a plurality of the fastening means (9) spaced apart along the length of the support (1), and in that there are a plurality of the stops (8) arranged in spaced pairs, the two stops (8) of each pair being positioned alongside a respective one of the fastening means (9), the two stops (8) of each pair and the respective fastening means (9) lying on a line extending transverse in the length of the strip.

6. A strip according to claim 5, characterised in that each stop (8) includes a shoulder engaging the said opposite face of the support (1).

7. A strip according to any preceding claim, characterised in that the sealing means (2) is at least partly fixed to the support (1) by an over-moulding process.

8. A strip according to any preceding claim, characterised in that the sealing means (2) is at least partly mechanically fixed to the support (1) by means of the or each stop (8).

9. A strip according to any preceding claim, characterised in that the or each fastening means (9) is generally of circular cross- section and has a fastening portion for resiliently locating in a respective aperture (6,7) in the frame (11).

10. A strip according to claim 9, characterised in that the fastening portion of the or each fastening means (9) is provided with a cross-shaped notch (10) for deformably locating in the aperture (14) in the frame (11).

11. A strip according to any preceding claim, characterised in that the frame (11) is part of a motor vehicle body.

12. A strip according to claim 11, characterised in that the or each fastening means (20) includes means for attaching interior trim (23) of the vehicle to the frame (11).

13. A strip according to claim 12, characterised in that the means for attaching the interior trim (23) of the vehicle to the frame (11) comprises a distal portion of the or each fastening means (20).

14. A strip according to any one of claims 11 to 13, characterised in that the frame (11) is a window opening and the closure member is a window glass (13).

15. A strip according to any preceding claim, characterised in that the sealing means (2) is formed from an elastomer.

16. A strip according to any preceding claim, characterised in that the sealing means (2) is provided with at least one flexible sealing lip (3,4,5) for sealing against the closure member (13).

17. A strip according to claim 15, characterised in that the sealing means (2) comprises a flexible sealing lip (3,4,5) for sealing against the frame (11).
